# EUROPÄISCHE PATENTANMELDUNG

(11) **EP 2 254 342 A1**
(43) Veröffentlichungstag der Anmeldung: **24.11.2010**
(21) Anmeldenummer: 09160536.0
(22) Anmeldetag: 18.05.2009
(51) Int. Cl.: H04N 7/62, H04N 7/24

(54) **Verfahren zur Audio-/Videosynchronisation**

(71) Anmelder: Albis Technologies AG, 8047 Zürich (CH)
(72) Erfinder: Schenk, Michael, 8442 Hettlingen (CH); Siebert, Peter, 8610 Uster (CH)
(74) Vertreter: Kley, Hansjörg

(57) **Zusammenfassung**

Es wird ein Verfahren zur Audio-/Videosynchronisation vorgestellt, das unabhängig vom Program Clock Reference Takt (PCR-Takt, PCR-Werte) ist. Dazu werden die Audiopakete der eingehenden Datenpakete (TS/PES/ES) in einem Pufferspeicher abgelegt. Der Füllstand des Pufferspeichers (2) wird benutzt, um mit einem Programmierbaren Taktgenerator (7) einen Lokalen Mastertakt (Local STC master clock) zu generieren. Mit diesem Mastertakt wird ein Systemtaktgenerator (9) getaktet, der aus den Zeitstempeln der einem Ausgabegerät (11) zugeführten Audiopakete einen an die Ausgabe der Audiopakete angepassten Lokalen Systemtakt (Local STC paced from audio) in der Sequenz der Audiopakete erzeugt, mit welchem lokalen Systemtakt (Local STC paced from audio) nur die Videopakete dem Ausgabegerät (11) zugeführt werden. Das vorgestellte Verfahren ist spiegelbar, also kann auch für Videopakete anstelle von Audiopaketen durchgeführt werden, die in einem Pufferspeicher (2) abgelegt werden.

## Beschreibung

Die Erfindung bezieht sich auf ein Verfahren zur Audio-/Videosynchronisation gemäss dem Oberbegriff der Patentansprüche 1 und 3.

Da die Übertragungsbandbreiten mit Hilfe der ADSL-Technologie grösser und die Codierung von Videodaten immer effizienter werden, ist es heute möglich, Videofilme über das Netz zu übertragen und dann am Zielort in guter Qualität zu konsumieren. Schlagwörter sind dabei Video on Demand VoD und Fernsehen über das IP-Protokoll IPTV. Die komprimierten Video- und die Audiodaten eines Filmes werden bei einer Übertragung separat, d.h. in eigenen Datenpaketen, übertragen. Aus diesem Grund besteht auf der Empfängerseite jeweils das Problem die Audio- und die Videodaten wieder zu synchronisieren. Dieser Vorgang wird Audio/Video-Synchronisation oder auch Lippensynchronisation genannt. Die Audio/Video-Synchronisation (kurz AV-Synchronisation) ist ein bekanntes Problem. Im MPEG Standard ISO/IEC 13818-1, Annex D [2] wird ein Zeitmodel zur AV-Synchronisation behandelt. Die separate Übertragung bedeutet jedoch nicht zwingend, das hierzu separate Streams verwendet werden.

Um in der deutschen Sprache nicht geläufige Begriffe einzuführen, werden teilweise englischsprachige Fachbegriffe verwendet. Die am Schluss aufgeführte Bezugszeichenliste wie auch das Glossar bilden einen integrierenden Bestandteil dieses Textes.

Gemäss MPEG-Spezifikation muss bei digitalen Videoverfahren jeweils eine Taktreferenz mitgeliefert werden. Die Taktreferenz heisst Program Clock Reference PCR. Jede Apparatur zum Dekodieren von digitalen Videodaten besitzt eine interne Taktreferenz STC von 27MHz. Um Taktabweichungen auszuregeln, wird die interne Taktreferenz STC mittels einem programmierbaren Taktgenerator PLL der Program Clock Reference PCR angepasst. Dieses Verfahren wurde jedoch für analoge Verbreitung konzipiert, welche normalerweise ein zeitsynchrones Eintreffen der PCR-Werte garantiert. Werden die digitalen Audio- und Videopakete jedoch mittels dem Internetprotokoll IP zum Endkunden gebracht, kann durch die paketorientierte Verarbeitung kein zeitsynchrones Verhalten der PCR-Werte mehr garantiert werden.

Die vorstehende Problematik ist aus auch der US 6,115,422 [1] zu entnehmen. Gemäss der US 6,115,422 [1] wird ein Verfahren zur Implementierung einer Anpassung der Zeitbasis wie folgt vorgeschlagen:

Ein Header in einem video- und Audiopakete enthaltenden Bitstream enthält eine Abweichung von der Zeitbasis. In den Paketen ist ferner wiederkehrend ein Zeitstempel «presentation time stamp» PTS enthalten, der die Darstellungszeit von entsprechenden Video- und Audiopaketen enthält. Die AV-Synchronisation wird nun durch ein «time base change flag» getriggert, das einen Interrupt auslöst um Video- und Audio-Dekoder zu synchronisieren.

Ausgehend von diesem Stand der Technik stellt sich für die vorliegende Erfindung die Aufgabe, ein Verfahren zur Audio-/Videosynchronisation zu schaffen, das unabhängig vom mit der Payload übertragenen Program Clock Reference Takt (PCR-Takt, PCR-Werte) ist.

Diese Aufgabe wird durch die im Patentanspruch 1 und 3 angegebenen Merkmale gelöst.

Die vorliegende Erfindung weist folgende Vorteile auf:

- Die Erfindung umgeht das Problem der als Burst auftretenden PCR-Werte durch zur Hilfenahme eines «presentation time stamp» Audio PTS. Da Audiodaten mit einer konstanten Frequenz abgetastet werden, wird das Burst Problem umgangen.

- Durch einen Algorithmus für die Überwachung des Audiopufferspeichers können die internen Taktfrequenzen so nachgeführt werden, dass keine Verzögerungen oder Unterläufe entstehen.

- Auch nach einigen Tagen ist keine Zeitdifferenz zwischen Aufnahme und Abspielung eines Filmes (enthaltend Audio und Bild/Video) zu erwarten.

- Die Kanalwechselzeit ist kürzer, da die Video- und Audiodaten nicht gegen die «Program Clock Reference PCR» synchronisiert werden müssen.

- Durch die Spiegelung, das heisst entweder Synchronisation des Audiostreams anhand der Videodaten oder Synchronisation des Videostreams anhand der Audiodaten kann die vorliegende Erfindung alternativ oder kumulativ entsprechend den Anforderungen eines Betreibers oder eines Benutzers

Vorteilhafte Weiterbildungen sind Gegenstand der abhängigen Ansprüche.

Zwei Ausführungsbeispiel der vorliegenden Erfindung wird nachstehend anhand der einzigen Figur erläutert, die zeigt:

- Figur 1: Blockschaltbild der für das Verfahren benötigten Komponenten.

- Figur 2: Blockschaltbild der für das Verfahren benötigten Komponenten.

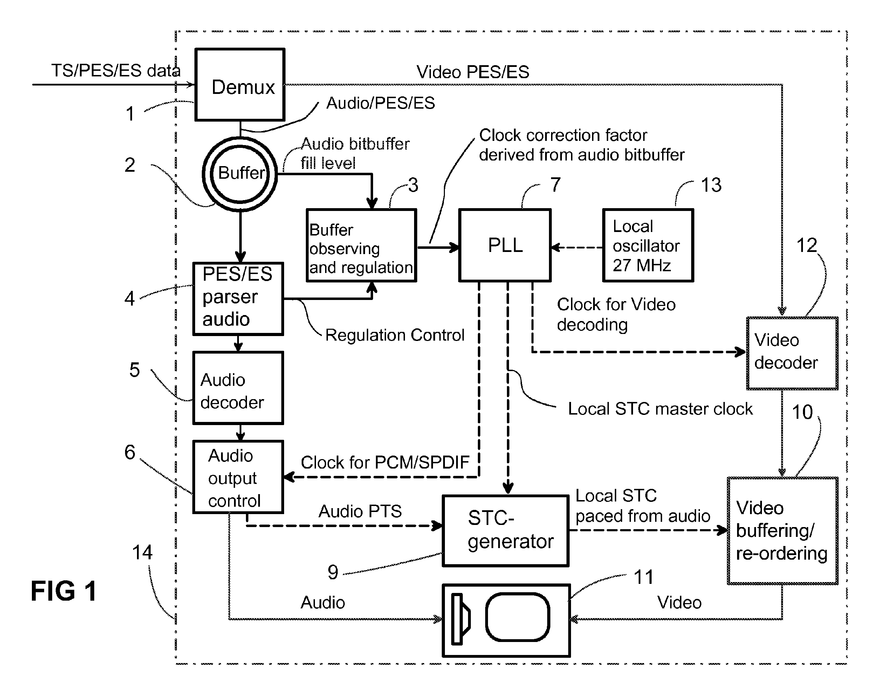

Das erste Ausführungsbeispiel gemäss der Figur 1 bezieht sich auf einen Transport Stream TS, der verschachtelt einen Packetized Elementary Stream PES und dieser wiederum einen Elementary Stream ES enthält. Die Erfindung kann ebenso gut auch angewendet werden, bei dem andere Transportlayer wie z.B. RTP verwendet werden.

Das in der Figur 1 gezeigte Blockschaltbild kann in einer Settop-Box 14 oder als ganzes integriert in einem Gerät 14 zur Audio-/Video-Wiedergabe enthalten sein. Nachstehend wird deshalb das Ganze einfach als Gerät 14 (engl. device) bezeichnet. Dieses Gerät 14 kann dabei das Video-/Ausgabegerät 11 enthalten, dies ist aber nicht zwingend, beispielsweise im Fall wo das Gerät 14 eine sogenannte Settop-Box oder ein integriertes Zugangsgerät ist, englisch: Integrated Access Device IAD.

Die eingehenden Datenpakete TS/PES/ES Data enthalten Audio- und Videopakete. Ein Packetized Elementary Stream PES enthält einen Header und als Content/Payload ein Audio- oder Videopaket. Ein jedes Audiopaket enthält einen Zeitstempel. Der Elementary Stream ES seinerseits enthält im Header eine Abtastrate (=Sampling Rate) und als Content/Payload wiederum ein Audio- oder Videopaket.

Eine erste Ausführungsform des erfindungsgemässen Verfahrens in einem Gerät 14 beinhaltet die Verfahrensschritte:

1. Eingehende Datenpakete TS/PES/ES werden im Demultiplexer 1 in ihre Elementarteile Audiopakete (codiert) und Videopakete (codiert) zerlegt.

2. Die codierten Audiopakete werden in einem Pufferspeicher 2 eingeschrieben.

3. Der Füllstand des Pufferspeichers 2 wird der Pufferüberwachung 3 zugeführt, die auch als «Buffer observing and regulation» 3 bezeichnet wird. Aus dem Füllstand abgeleitet wird ein Taktkorrekturfaktor und einem programmierbaren Taktgenerator 7 zugeführt. Der programmierbare Taktgenerator 7 bezieht seinen Grundtakt aus dem Local Oscillator 13, üblicherweise der Frequenz 27 MHz.
In der Pufferüberwachung 3 wird der Pufferfüllstand über einen Zeitraum von 1 Sekunde akkumuliert. Dieser erste Mittelwert wird einem Moving-Avarage Filter zugeführt um schnelle Aenderungen auszufiltern und einen stabilen langsam ändernden Mittelwert zu erzeugen. Sobald das Moving-Average Filter arbeitet, wird ein Basisfüllstand errechnet. Dies erfolgt bei einer bevorzugten Implementierung 60 Sekunden nach dem Starten. Daher hat das Moving-Average Filter 60 Einträge. Über- oder unterschreitet der momentane Mittelwert eine definierbare Schwelle, so werden die internen Takte für die Ausgabe des Video- und Audiosignales entsprechend beschleunigt oder verlangsamt. Dies geschieht über den von der Pufferüberwachungseinheit 3 an den programmierbaren Taktgenerator 7 zugeführten Taktkorrekturfaktor, in der Figur bezeichnet mit «clock correction factor derived from audio bitbuffer». Nach einer Korrektur wird das Moving-Average Filter neu gestartet, jedoch wird der Basisfüllstand und die Schwellen beibehalten.
- Überschreitet der momentane Mittelwert des Moving-Average Filters den vorgenannten Basisfüllstand, so werden die Ausgabe des Video- und Audiosignales über den vorgenannten Taktkorrekturfaktor beschleunigt um den Mittelwert wieder in Richtung des Basisfüllstand zu bringen.
- Unterschreitet der momentane Mittelwert des Moving-Average Filters die definierte Schwelle, so werden die Ausgabe des Video- und Audiosignales über den vorgenannten Taktkorrekturfaktor verlangsamt um den Mittelwert wieder in Richtung des Basisfüllstands zu bringen.
Jedes Mal wenn ein neuer Inhalt zugeführt wird oder das betreffende Gerät in Betrieb genommen wird, muss die Pufferüberwachungseinheit 3 neu gestartet werden. Dies geschieht über die «Regulation Control» die aus dem PES/ES-Parser herausgeführt wird, weiteres zur Funktion des Parsers 4 siehe nachstehender Schritt 4.

4. Die Audiopakete werden aus dem Bufferspeicher 2 dem PES/ES parser zugeführt. Im Parser erfolgt das Entpacken und Verarbeiten zum Elementary Stream ES mit Audiopaketen.

5. In Audio Decoder 5 werden die kodierten Audiopakete in das PCM-Format dekodiert.

6. Die Ausgabe der dekodierten Audiodaten im PCM-Format wird vom Programmierbarer Taktgenerator 7 getaktet, siehe in der Figur «Clock for PCM/SPDIF». SPDIF bezeichnet eine Schnittstellen-Spezifikation für die Übertragung digitaler Audiosignale.
Aus der Ausgabe «Audio» - siehe Figur - der dekodierten Audiodaten wird der aktuelle Zeitstempel «Presentation Time Stamp» bzw. «Audio PTS» abgeleitet. Im Systemtaktgenerator 9 (nicht zur verwechseln mit dem programmierbaren Taktgenerator 3) wird ein lokaler «System Time Clock» STC anhand der Audio Zeitstempel PTS und des Lokalen STC master clocks nachgeführt. Mit diesem so nachgeführten bzw. korrigiertem «System Time Clock» STC wird das Video buffering/re-ordering 10 getaktet. Dadurch wird das Videobild synchronisiert um Lippensynchronizität zu erreichen.

Die vorliegende Erfindung kann auch gespiegelt werden, nämlich eine Synchronisation der Audiopakete anhand der Zeitstempel der Videopakete. Die Schritte einer zweiten Ausführungsform beinhalten:

1. Eingehende Datenpakete TS/PES/ES werden im Demultiplexer 1 in ihre Elementarteile Audiopakete (codiert) Audio PES/ES und Videopakete (codiert) Video/PES/ES zerlegt.

2. Die codierten Videopakete werden in einem Pufferspeicher 2 eingeschrieben.

3. Der Füllstand des Pufferspeichers 2 wird der Pufferüberwachung 3 zugeführt, die auch als «Buffer observing and regulation» 3 bezeichnet wird. Aus dem Füllstand abgeleitet wird ein Taktkorrekturfaktor und einem programmierbaren Taktgenerator 7 zugeführt. Der programmierbare Taktgenerator 7 bezieht seinen Grundtakt aus dem Local Oscillator 13, üblicherweise der Frequenz 27 MHz.
In der Pufferüberwachung 3 wird der Pufferfüllstand über einen Zeitraum von 1 Sekunde akkumuliert. Dieser erste Mittelwert wird einem Moving-Avarage Filter zugeführt um schnelle Aenderungen auszufiltern und einen stabilen langsam ändernden Mittelwert zu erzeugen. Sobald das Moving-Average Filter arbeitet, wird ein Basisfüllstand errechnet. Dies erfolgt bei einer bevorzugten Implementierung 60 Sekunden nach dem Starten. Daher hat das Moving-Average Filter 60 Einträge. Über- oder unterschreitet der momentane Mittelwert eine definierbare Schwelle, so werden die internen Takte für die Ausgabe des Video- und Audiosignales entsprechend beschleunigt oder verlangsamt. Dies geschieht über den von der Pufferüberwachungseinheit 3 an den programmierbaren Taktgenerator 7 zugeführten Taktkorrekturfaktor, in der Figur bezeichnet mit «clock correction factor derived from video bitbuffer». Nach einer Korrektur wird das Moving-Average Filter neu gestartet, jedoch wird der Basisfüllstand und die Schwellen beibehalten.
- Überschreitet der momentane Mittelwert des Moving-Average Filters den vorgenannten Basisfüllstand, so werden die Ausgabe des Video- und Audiosignales über den vorgenannten Taktkorrekturfaktor beschleunigt um den Mittelwert wieder in Richtung des Basisfüllstand zu bringen.
- Unterschreitet der momentane Mittelwert des Moving-Average Filters die definierte Schwelle, so werden die Ausgabe des Video- und Audiosignales über den vorgenannten Taktkorrekturfaktor verlangsamt um den Mittelwert wieder in Richtung des Basisfüllstands zu bringen.
Jedes Mal wenn ein neuer Inhalt zugeführt wird oder das betreffende Gerät 14 in Betrieb genommen wird, muss die Pufferüberwachungseinheit 3 neu gestartet werden. Dies geschieht über die «Regulation Control» die aus dem PES/ES-Parser herausgeführt wird, weiteres zur Funktion des Parsers siehe nachstehender Schritt 4.

4. Die Videopackete werden aus dem Bufferspeicher 2 dem PES/ES parser video 15 zugeführt. Im Parser 15 erfolgt das Entpacken und Verarbeiten zum Elementary Stream ES mit Videopaketen.

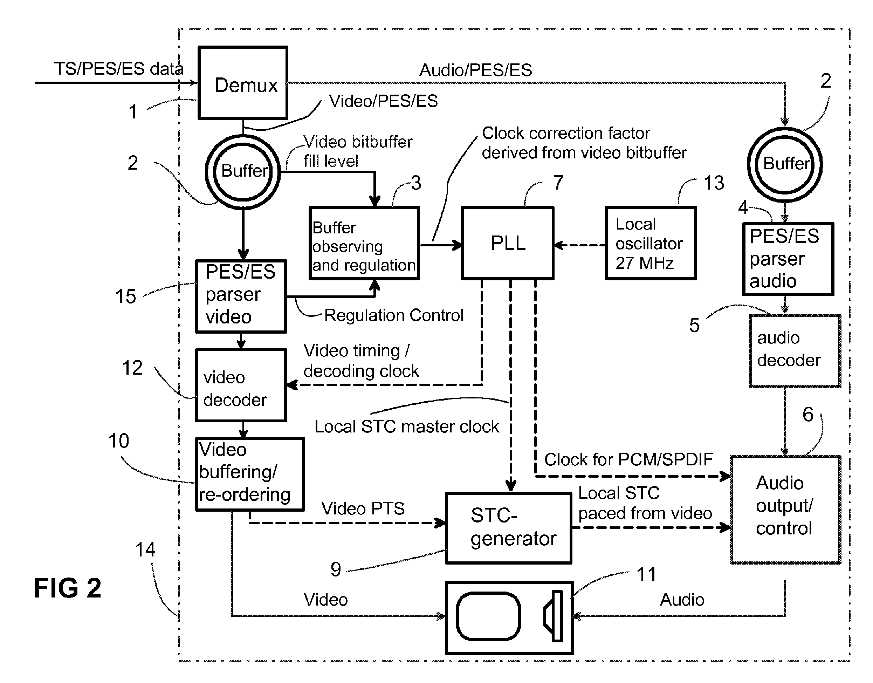

5. In Video Decoder 12 werden die kodierten Videopakete dekodiert. Der Video Decoder 12 wird vom programmierbaren Taktgenerator 7 getaktet, siehe in der Figur 2 «Video timing / decoding clock».

6. Aus der Ausgabe «Video» - siehe Figur 2 - der dekodierten Videodaten wird der aktuelle Zeitstempel «Presentation Time Stamp» bzw. «Video PTS» abgeleitet. Im Systemtaktgenerator 9 (nicht zur verwechseln mit dem programmierbaren Taktgenerator 7) wird ein lokaler «System Time Clock» STC anhand der Video Zeitstempel PTS und des Lokalen STC master clocks nachgeführt. Mit diesem so nachgeführten bzw. korrigiertem «System Time Clock» STC wird die Audioausgabe 6 getaktet. Dadurch wird das Audiosignal synchronisiert um Lippensynchronizität zu erreichen.

**Liste der verwendeten Bezugszeichen; Glossar**
- 1: Demultiplexer
- 2: Pufferspeicher, Circular PES/ES bitbuffer
- 3: Pufferüberwachung, Buffer observing and regulation
- 4: PES/ES parser audio
- 5: Audio decoder
- 6: Audio output control
- 7: Programmierbarer Taktgenerator, Phase Locked Loop PLL
- 9: Systemtaktgenerator, STC generator
- 10: Video buffering/re-ordering
- 11: Ausgabegerät, Video-/Audioausgabegerät, output device
- 12: Video decoder
- 13: Oszillator, local oscillator 27 MHz
- 14: Gerät, device

- ADSL: Asymmetric Digital Subscriber Line
- AV: Audio/Video
- ES: Elementary stream
- IPTV: Fernsehen über IP-Protokoll
- MPEG: Motion Picture Experts Group
- PES: Packetized Elementary Stream
- PCR: Program Clock Reference
- PLL: Phase locked loop
- PS: Program Stream
- PTS: Presentation time stamp
- SPDIF: Sony/Philips Digital Interface, auch abgekürzt als
- S/P-DIF STC: System time clock
- TS: Transport Stream

### Liste der zitierten Dokumente

[1] US 6,115,422
   «Protocol and procedure for time base change in an MPEG.2 Copliant datastream» Anderson et al. Assignee: International Business Machines Coporation, Armonk, N.Y.
[2] ISO/IEC 13818-1
   Third editon 2007-10-15
   Amendement 1 2007-11-01
   Information technology -
   Generic coing of moving pictures and assciated adudio information: Systems
   Amendment1: Transport of MPEG-4
   streaming text and MPEG-4 lossless audio
   over MPEG-2 systems

## Patentansprüche

1. Verfahren zur Audio-/Videosynchronisation für für ein Ausgabegerät (11), bei dem ein eingehender Audio- und Videopackete enthaltender Datenstrom (TS/PES/ES data) dem Ausgabegerät (11) in einem lokalen Systemtakt (STC master clock) zugeleitet wird, wobei die Audiopakete einen Zeitstempel enthalten und die Audiopakete vorgängig in einem Pufferspeicher (2) zwischengespeichert werden;
**dadurch gekennzeichnet, dass**
der lokale Systemtakt (Local STC) für die Ausgabe der Videopakete mit den in den Audiopaketen enthaltenen Zeitstempeln und einem ermittelten Füllstand des Pufferspeichers (2) generiert wird.

2. Verfahren zur Audio-/Videosynchronisation nach Anspruch 1; **gekennzeichnet durch die Verfahrensschritte**
(A) der ermittelte Füllstand des Pufferspeichers (2) wird einer Pufferüberwachungseinheit (3) zugeführt und abhängig vom Füllstand wird ein Taktkorrekturfaktor bestimmt;
(B) der Taktkorrekturfaktor wird einem programmierbaren Taktgenerator (7) zugeführt, der von einem Oszillator (13) getaktet wird;
(C) im Taktgenerator (7) korrigierte Takte (STC master clock/Clock PCM/SPDIF) werden als lokale Mastertakte einem Systemtaktgenerator (9) zugeführt, der daraus einen lokalen Systemtakt (paced local STC) generiert, der mit den Zeitstempeln (Audio PTS) synchronisiert wird, die den an das Ausgabegeräte (11) ausgegebenen Audiopaketen entstammen;
(D) mit dem lokalen Systemtakt (paced local STC) werden die Videopakete von einer Video buffering/reordering an das Ausgabegerät ausgegeben.

3. Verfahren zur Audio-/Videosynchronisation für für ein Ausgabegerät (11), bei dem ein eingehender Audio- und Videopakete enthaltender Datenstrom (TS/PES/ES data) dem Ausgabegerät (11) in einem lokalen Systemtakt (STC master clock) zugeleitet wird, wobei die Videopakete einen Zeitstempel enthalten und die Videopakete vorgängig in einem Pufferspeicher (2) zwischengespeichert werden;
**dadurch gekennzeichnet, dass**
der lokale Systemtakt (Local STC) für die Ausgabe der Audiopakete mit den in den Videopaketen enthaltenen Zeitstempeln und einem ermittelten Füllstand des Pufferspeichers (2) generiert wird.

4. Verfahren zur Audio-/Videosynchronisation nach Anspruch 1; **gekennzeichnet durch die Verfahrensschritte**
(A) der ermittelte Füllstand des Pufferspeichers (2) wird einer Pufferüberwachungseinheit (3) zugeführt und abhängig vom Füllstand wird ein Taktkorrekturfaktor bestimmt;
(B) der Taktkorrekturfaktor wird einem programmierbaren Taktgenerator (7) zugeführt, der von einem Oszillator (13) getaktet wird;
(C) im Taktgenerator (7) korrigierte Takte (STC master clock/Clock PCM/SPDIF) werden als lokale Mastertakte einem Systemtaktgenerator (9) zugeführt, der daraus einen lokalen Systemtakt (paced local STC) generiert, der mit den Zeitstempeln (Video PTS) synchronisiert wird, die den an das Ausgabegeräte (11) ausgegebenen Videopaketen entstammen;
(D) mit dem lokalen Systemtakt (paced local STC) werden die Audiopakete von einer Audio output/control (6) an das Ausgabegerät (11) ausgegeben.

5. Verfahren nach Anspruch 2 oder 4,
**dadurch gekennzeichnet, dass**
im Verfahrenschritt (A) der Pufferfüllstand über einen festen Zeitraum akkumuliert wird und einem Moving-Average Filter zugeführt wird, um schnelle Aenderungen auszufiltern.

6. Verfahren nach Anspruch 5,
**dadurch gekennzeichnet, dass**
der feste Zeitraum 1 Sekunde beträgt.

7. Verfahren nach Anspruch 5 oder 6,
**dadurch gekennzeichnet, dass**
die Pakete nach der Speicherung im Pufferspeicher (3) einem Parser (4, 15)) zum Entpacken zugeführt werden und daraus ein Signal (Regulation Control) zum Starten der Pufferüberwachungseinheit (3) erzeugt wird.

8. Verfahren nach einem der Ansprüche 5 bis 7,
**dadurch gekennzeichnet, dass**
aus dem Moving-Average Filter ein Basisfüllstand errechnet wird und der momentante Füllstand des Pufferspeichers gegenüber diesem Basisfüllstand zur Bestimmung des Taktkorrekturfaktor herangezogen wird.

9. Verfahren nach Anspruch 5 bis 8,
**dadurch gekennzeichnet, dass**
das Moving-Average Filter nach einer festgelegten Zeitspanne abhängig vom vom Parser (4, 15) entstammenden Signal (Regulation Control) den Betrieb aufnimmt.

10. Verfahren nach Anspruch 9,
**dadurch gekennzeichnet, dass**
die festgelegte Zeitspanne in der Grössenordnung von 60 Sekunden liegt.
